# FASCICULE DE BREVET EUROPEEN

(11) **EP 3 538 912 B1**
(45) Date de publication et mention de la délivrance du brevet: **06.04.2022**
(21) Numéro de dépôt: 17816454.7
(22) Date de dépôt: 07.11.2017
(51) Int. Cl.: G01S 5/02, G01S 11/10

(54) **PROCÉDÉ DE TRANSMISSION D'UN SIGNAL PAR UN DISPOSITIF ÉMETTEUR VERS UN SATELLITE NON GÉOSYNCHRONE**
VERFAHREN ZUR ÜBERTRAGUNG EINES SIGNALS VON EINER SENDEVORRICHTUNG AN EINEN NICHT-GEOSYNCHRONEN SATELLITEN
METHOD FOR TRANSMITTING A SIGNAL BY A TRANSMITTER DEVICE TO A NON-GEOSYNCHRONOUS SATELLITE

(30) Priorité: 08.11.2016 FR 1660762
(43) Date de publication de la demande: 18.09.2019
(73) Titulaire: Sigfox, 31670 Labege (FR)
(72) Inventeur: FERNANDEZ, David, 31400 Toulouse (FR); FOURTET, Christophe, 82170 Pompignan (FR)
(74) Mandataire: Ipside
(86) Numéro de dépôt international: PCT/EP2017/078495
(87) Numéro de publication internationale: WO 2018/087095

(56) Documents cités:
- WO-A1-02/37135
- US-A- 6 154 171
- US-A1- 2005 012 666
- US-A1- 2016 178 753

## Description

### DOMAINE TECHNIQUE

La présente invention appartient au domaine des systèmes de télécommunication sans fil et concerne plus particulièrement un procédé de transmission d'un signal entre au moins un dispositif émetteur et au moins un satellite se déplaçant en orbite.

L'invention trouve notamment une application dans le domaine des objets connectés.

### ÉTAT DE LA TECHNIQUE

La présente invention trouve une application particulièrement avantageuse, bien que nullement limitative, dans les systèmes de télécommunication sans fil à bande ultra étroite. Par « bande ultra étroite » *(« Ultra Narrow Band»* ou UNB dans la littérature anglo-saxonne), on entend que le spectre fréquentiel instantané des signaux radioélectriques émis par un dispositif émetteur, à destination d'un satellite, est de largeur fréquentielle inférieure à deux kilohertz, voire inférieure à un kilohertz.

De tels systèmes de télécommunication sans fil UNB sont particulièrement adaptés pour des applications du type M2M (acronyme anglosaxon pour « *Machine-to-Machine* ») ou du type « Internet des objets» (« *Internet of Things* » ou loT dans la littérature anglo-saxonne).

Il convient de souligner que les dispositifs émetteurs de ce type de système de télécommunication peuvent atteindre une autonomie de l'ordre d'une vingtaine d'années, à condition que le dispositif émetteur n'émette pas de signaux inutilement, notamment à destination d'un satellite n'étant pas à portée dudit dispositif émetteur.

A cet effet, il existe dans l'art antérieur des techniques permettant à un dispositif émetteur de détecter la présence d'un satellite émettant un signal d'une puissance donnée à intervalle régulier. La détection est effectuée à partir de la puissance du signal reçu par le dispositif émetteur, ce qui permet d'en déduire approximativement la distance de propagation du signal entre le satellite et le dispositif émetteur.

L'inconvénient majeur de ces techniques est qu'elles ne permettent pas de déterminer précisément les périodes propices aux transmissions de signaux vers le satellite, c'est-à-dire lorsque le satellite est le plus proche du dispositif émetteur. En effet, la distance entre le satellite et le dispositif émetteur n'étant pas une donnée connue, les périodes propices aux transmissions sont calculées à partir des variations sur la distance estimée entre le satellite et le dispositif émetteur. Or la propagation du signal ayant tendance à fluctuer de manière inopinée, ces variations engendrent des transmissions peu efficaces, notamment lorsque le satellite n'est pas à portée du dispositif émetteur.

Un exemple d'état de la technique est décrit par WO 02/37135.

### EXPOSÉ DE L'INVENTION

La présente invention a pour objectif de remédier à tout ou partie des limitations des solutions de l'art antérieur, notamment celles exposées ci-avant, en proposant une solution permettant de déterminer au moins une période propice à l'émission d'un ou plusieurs signaux d'un dispositif émetteur communiquant vers un satellite se déplaçant en orbite.

A cet effet, et selon un premier aspect, l'invention concerne un procédé de transmission d'un signal par un dispositif émetteur vers un satellite se déplaçant en orbite autour de la Terre, ledit dispositif émetteur et le satellite comprenant des moyens de télécommunication sans fil, le procédé comprenant les étapes suivantes :
- réception par ledit dispositif émetteur d'un signal émis par le satellite, dit signal de présence ;
- analyse d'un décalage fréquentiel induit par effet Doppler sur le signal de présence reçu par ledit dispositif émetteur ;
- évaluation par ledit dispositif émetteur d'un critère de proximité entre ledit dispositif émetteur et ledit satellite à partir d'une estimation de la variation temporelle du décalage fréquentiel et/ou à partir d'une estimation du décalage fréquentiel, calculée(s) au cours de l'étape d'analyse du décalage fréquentiel;
- émission d'un signal par ledit dispositif émetteur si le critère de proximité est vérifié.

Ainsi, l'émission du signal par le dispositif émetteur est effectuée lorsque le critère de proximité est vérifié. Le critère de proximité permet notamment de déterminer une période propice à l'émission du signal, correspondant au moment où le satellite est proche du dispositif émetteur.

L'effet Doppler induit un décalage fréquentiel du signal de présence au cours de sa transmission au dispositif émetteur. L'effet Doppler est fonction de la vitesse du satellite, de la vitesse du dispositif émetteur, de l'angle entre le vecteur vitesse du satellite et à la droite formée par le satellite et le dispositif émetteur, et de l'angle entre le vecteur vitesse du dispositif émetteur et cette même droite. En d'autres termes, l'effet Doppler est fonction de l'angle entre la direction de déplacement relative du dispositif émetteur et du satellite émettant le signal de présence et la droite reliant le dispositif émetteur et le satellite, cette droite correspondant à la direction de propagation du signal de présence entre le dispositif émetteur et le satellite.

En analysant le décalage fréquentiel induit par l'effet Doppler, il est possible de déterminer si le satellite est en train de se rapprocher ou de s'éloigner du dispositif émetteur. Par ailleurs, il convient de souligner que lorsque le satellite est au plus proche du dispositif émetteur, le décalage fréquentiel induit par effet Doppler s'annule.

On entend par dispositif émetteur tout objet muni d'un moyen de télécommunication apte à émettre un signal. Le dispositif émetteur peut être par exemple un objet connecté. On entend par objet connecté, tout appareil connecté à un réseau informatique d'échanges de données de type Internet, interrogeable ou contrôlable à distance. L'objet connecté est de type quelconque. Il peut être par exemple une station météo collectant les données de températures intérieure et extérieure d'une habitation, un capteur de mesure du niveau de liquide ou de gaz dans une citerne ou une cuve, un détecteur d'occupation d'une place de parking, un capteur de mesure du flux de personnes accédant à un bâtiment, etc. L'objet connecté peut également être une base de relais entre un appareil connecté et un réseau. Cette base de relais peut faire office de répétiteur ou de tampon en stockant des données à transmettre au réseau dans une mémoire informatique de la base de relais.

Dans des modes particuliers de mise en œuvre, le procédé de transmission peut comporter en outre l'une ou plusieurs des caractéristiques suivantes, prises isolément ou selon toutes les combinaisons techniquement possibles.

Dans des modes particuliers de mise en œuvre, l'étape d'analyse du décalage fréquentiel comprend une sous-étape de mesure d'une fréquence principale du signal de présence et une sous-étape d'estimation du décalage fréquentiel induit par effet Doppler en fonction de la fréquence principale mesurée et d'une fréquence principale théorique dudit signal de présence.

Il convient de souligner que la fréquence principale du signal de présence est représentative par exemple de la fréquence d'une porteuse dudit signal de présence, ou encore de la fréquence d'une sous-porteuse dudit signal de présence, d'une fréquence centrale d'un spectre fréquentiel instantané dudit signal de présence, d'une fréquence minimale ou maximale dudit spectre fréquentiel instantané, etc.

Ainsi, l'émission du signal par le dispositif émetteur peut être effectuée lorsque le satellite est au plus près du dispositif émetteur, le satellite survolant ou non le dispositif émetteur. En effet, la fréquence principale théorique correspond à la fréquence principale avec laquelle le signal de présence a été émis par le satellite, de sorte que le décalage fréquentiel induit par effet Doppler peut être estimé en calculant la différence entre la fréquence principale mesurée et la fréquence principale théorique. Lorsque le décalage fréquentiel ainsi estimé est proche de zéro, cela signifie que le satellite est proche dudit dispositif émetteur.

Dans des modes particuliers de mise en œuvre, l'étape d'évaluation du critère de proximité comprend une sous-étape de comparaison du décalage fréquentiel estimé avec une valeur seuil.

La valeur seuil, pouvant également être appelée seuil de proximité, permet au dispositif émetteur de déterminer si il peut émettre ou non un signal à destination du satellite.

Dans des modes particuliers de mise en œuvre, l'étape d'analyse du décalage fréquentiel comprend une sous-étape d'estimation d'une variation temporelle du décalage fréquentiel induit par effet Doppler à partir d'une évaluation d'une variation temporelle de la fréquence principale du signal de présence entre au moins deux instants respectifs différents.

Ainsi, la proximité du satellite peut être déterminée à partir d'une approximation de la dérivée d'une courbe temporelle de la fréquence principale du signal de présence reçu par ledit dispositif émetteur. Il convient de souligner que la variation temporelle de la fréquence principale est généralement similaire à la variation temporelle du décalage fréquentiel, notamment lorsque le signal de présence est émis avec une fréquence principale constante au cours du temps. La variation temporelle de la fréquence principale peut être mesurée directement en mesurant la différence entre la fréquence principale à deux instants respectifs différents ou indirectement en mesurant la fréquence principale en au moins deux instants respectifs différents, et en calculant la différence entre les fréquences principales mesurées.

Dans des modes particuliers de mise en œuvre, l'étape d'évaluation du critère de proximité comprend une sous-étape de comparaison de la variation temporelle estimée du décalage fréquentiel avec une valeur seuil.

Dans des modes particuliers de mise en œuvre, le signal de présence émis par le satellite comprend au moins une sous-porteuse modulée avec un écart fréquentiel prédéterminé par rapport à une fréquence porteuse dudit signal de présence.

Ainsi, le signal de présence peut être plus facilement identifié parmi une multitude de signaux reçus.

Dans des modes particuliers de mise en œuvre, l'étape de réception du signal de présence comprend une sous-étape de détection du signal de présence en fonction dudit écart fréquentiel.

Dans des modes particuliers de mise en œuvre, la sous-étape de détection est effectuée par l'intermédiaire d'un récepteur à super réaction.

Dans des modes particuliers de mise en œuvre, l'analyse du décalage fréquentiel induit par effet Doppler sur le signal de présence comprend une étape de mesure d'une fréquence principale ou d'une variation temporelle d'une fréquence principale, effectuée par l'intermédiaire d'une boucle à verrouillage de phase.

Dans des modes particuliers de mise en œuvre, le procédé comprend en outre une étape de réglage dynamique du critère de proximité par le dispositif émetteur en fonction d'une information de réglage reçue dans un signal émis par le satellite.

Ainsi, le seuil de proximité peut être déterminé dynamiquement en fonction de la charge du satellite et communiqué aux dispositifs émetteurs situés dans le champ du satellite. La valeur du seuil de proximité peut ainsi être commune à plusieurs dispositifs émetteurs, ou être distincte entre deux dispositifs émetteurs, en codant par exemple des valeurs différentes de la valeur du seuil sur deux canaux différents.

Dans des modes particuliers de mise en œuvre, l'information de réglage est déterminée, par le satellite, en fonction du nombre de signaux reçus par ledit satellite sur une période prédéterminée.

Ainsi, le réglage dynamique permet de régler la couverture du satellite, également appelée la fauchée.

Selon un second aspect, la présente invention concerne un dispositif émetteur d'un système de télécommunication sans fil, mettant en œuvre un procédé de transmission selon l'un quelconque des modes de mise en œuvre de l'invention.

Dans des modes particuliers de réalisation, le dispositif émetteur est un objet connecté.

Selon un troisième aspect, la présente invention concerne un système de télécommunication sans fil comprenant au moins un dispositif émetteur selon l'un quelconque des modes de réalisation de l'invention et au moins un satellite se déplaçant en orbite autour de la Terre.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de réalisation d'un système de télécommunication,
- Figure 2 : des courbes illustrant les variations du décalage fréquentiel en fonction de la position d'un satellite relativement à un dispositif émetteur du système de télécommunication de la figure 1,
- Figure 3 : un diagramme illustrant un exemple de mise en œuvre d'un procédé de transmission d'un signal par un dispositif émetteur vers un satellite,
- Figure 4 : deux courbes illustrant un traitement effectué pour la détection d'un signal de présence émis par le satellite,
- Figure 5 : une courbe illustrant un exemple de décalage fréquentiel d'un signal en fonction du temps.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

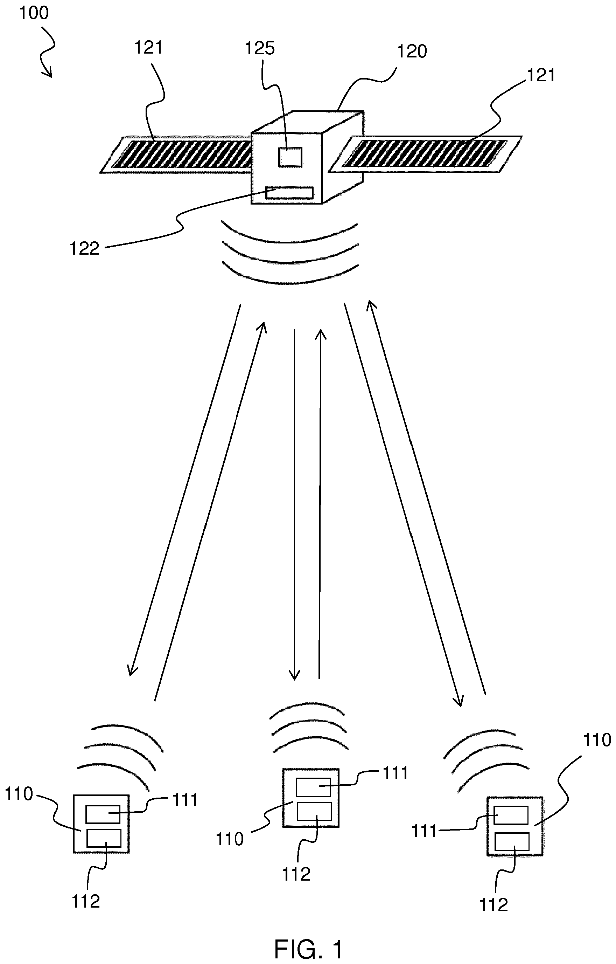

La figure 1 représente schématiquement un système 100 de télécommunication sans fil comprenant une pluralité de dispositifs émetteurs 110 et un satellite 120 d'une constellation de nanosatellites préalablement mis en orbite autour de la Terre.

Les dispositifs émetteurs 110 et le satellite 120 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les dispositifs émetteurs 110 sont dans le présent exemple non limitatif de l'invention des objets connectés comprenant des moyens 111 de télécommunication aptes à transmettre des signaux au satellite 120. Il convient de souligner que les objets 110 peuvent également, dans des modes particuliers de réalisation, échanger des signaux entre eux.

Par exemple, les objets connectés 110 comprennent en outre une carte électronique 112 munie d'un microprocesseur apte à traiter des données, voire d'une mémoire informatique apte à stocker des données avant leur transmission par l'intermédiaire de signaux.

Les signaux transmis par les dispositifs émetteurs 110, et/ou les signaux transmis par le satellite 120, sont par exemple des signaux à bande ultra étroite (UNB, acronyme anglais de « *Ultra Narrow Band* »).

Les signaux UNB échangés au sein du système 100 de télécommunication comprennent une porteuse dont la fréquence est de l'ordre de la centaine de MHz, voire du GHz. La largeur de bande des signaux UNB est inférieure à 2 kHz, voire inférieure à 1 kHz.

Les moyens 111 de télécommunication reliés à la carte électronique 112 dudit objet connecté 110 comprennent dans le présent exemple non limitatif de l'invention une antenne apte à transmettre et recevoir des signaux UNB, une boucle à verrouillage de phase et un récepteur à super réaction.

Le satellite 120 est dans le présent exemple, un nanosatellite de type CubeSat formée par une structure cubique de dix centimètres de côté. Deux panneaux photovoltaïques 121 déployés de part et d'autre de la structure cubique alimentent le satellite 120 en énergie. La masse du satellite 120 est sensiblement égale à cinq kilos. Une antenne 122 dirigée vers la surface terrestre permet d'émettre ou de recevoir des signaux UNB à destination ou en provenance des objets connectés 110. Il convient de souligner que le satellite 120 est placé sur une orbite de l'ordre de cinq cents kilomètres autour de la Terre. Le satellite 120 se déplace ainsi autour de la Terre à une vitesse de l'ordre de sept kilomètres par seconde, et effectue un tour complet autour de la planète en une durée de l'ordre de quatre-vingt-dix minutes. De manière plus générale, le satellite 120 est en orbite non-géosynchrone, par exemple en orbite LEO (« *Low Earth Orbit* ») ou MEO (« *Medium Earth Orbit »).*

Le satellite 120 comprend en outre une balise 125, également connue sous le terme anglais de « *beacon* », émettant un signal UNB en continu, appelé par la suite signal de présence. Le signal de présence émis par la balise 125 comprend par exemple une porteuse dont la fréquence, au moment de l'émission, est par exemple sensiblement constante au cours du temps.

Dans une variante de ce mode de réalisation particulier de l'invention, la balise 125 émet des signaux de présence de manière discontinue, préférentiellement à intervalles réguliers. Les signaux de présence émis sont par exemple de durée limitée, par exemple comprise entre quelques centaines de millisecondes et quelques secondes.

Il convient de souligner que dans un souci d'économie d'énergie, l'objet connecté 110 est généralement en mode veille pendant la plupart du temps et qu'il sort de ce mode veille à intervalles régulier pour écouter et/ou transmettre des signaux.

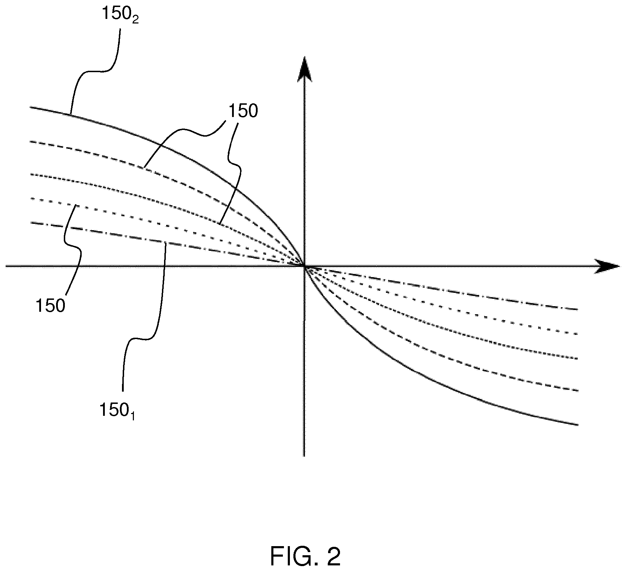

La figure 2 représente un exemple de courbes 150 d'évolution du décalage fréquentiel subi par des signaux reçus par l'objet connecté 110 en provenance du satellite 120, en fonction de la position du satellite par rapport à l'objet connecté. La figure 2 comprend cinq courbes dont chacune correspond à un angle d'élévation maximum différent du satellite 120 vu par l'objet connecté 110. On entend par angle d'élévation maximum, également appelé sous le terme anglais de « *cross-track angle* », l'angle entre le sol et la direction du satellite 120, mesuré au niveau de l'objet lorsque le satellite 120 est au plus près de l'objet connecté 110. L'abscisse des courbes 150 correspond à la différence entre la latitude du satellite 110 et la latitude de l'objet connecté 110. Lorsque l'angle d'élévation maximum est faible, comme dans le cas de la courbe 150₁, le satellite 120 est vu par l'objet connecté 110 comme étant proche de l'horizon, tandis que lorsque l'angle d'élévation maximum est de l'ordre de quatre-vingt-dix degrés, comme dans le cas de la courbe 150₂, l'objet connecté 110 est situé sensiblement à l'aplomb de la trajectoire du satellite 120.

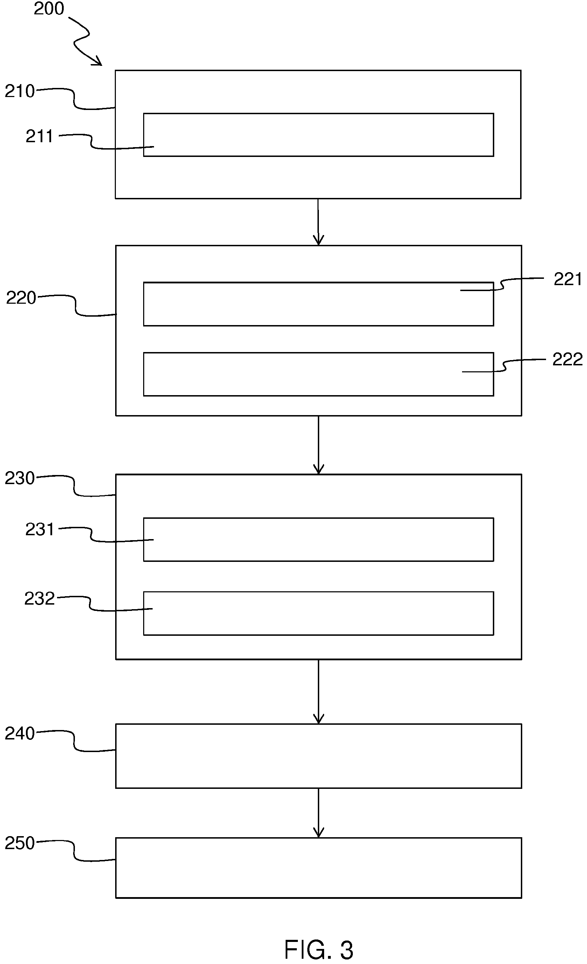

La figure 3 représente sous la forme d'un schéma synoptique un procédé 200 de transmission d'un signal entre un des objets connectés 110 et le satellite 120 se déplaçant en orbite.

Le procédé 200 comprend une étape 210 de réception par l'objet connecté 110 du signal de présence émis par le satellite 120.

Dans des modes préférés de mise en œuvre, le signal de présence comporte une porteuse de fréquence f_{c}_ₛₐₜ et au moins une sous-porteuse modulée présentant un écart fréquentiel fₛ prédéterminé par rapport à la fréquence f_{c}_ₛₐₜ afin de pouvoir différencier les signaux provenant des balises, des signaux provenant des objets connectés 110, qui ne présentent pas cette forme particulière ou qui présentent dans le cas contraire un écart fréquentiel prédéterminé différent de l'écart fréquentiel fₛ du signal de présence.

En d'autres termes, le signal de présence du satellite 120 comprend une information permettant d'identifier la provenance du signal de présence, c'est-à-dire dans le cas présent de la balise 125 du satellite 120, par l'intermédiaire de la présence de la sous-porteuse modulée présentant un écart fréquentiel fₛ prédéterminé par rapport à la fréquence f_{c_sat}. De manière plus générale, l'information d'identification du signal de présence peut être codée dans le signal de présence émis par la balise 125 par toute technique connue de l'homme du métier.

Il convient de souligner qu'un tel signal de présence comprenant une porteuse et au moins une sous-porteuse est de type auto-synchrone. La reconnaissance des signaux de présence grâce à la présence d'une sous-porteuse présentant un écart fréquentiel prédéterminé par rapport à la porteuse est avantageusement utilisée dans le cas d'un réseau de télécommunication, dit hydride, comprenant une pluralité d'objets connectés et une pluralité de satellites, dans lequel un objet connecté peut recevoir des signaux provenant à la fois d'un satellite et d'un autre objet connecté.

L'étape 210 comprend par exemple une sous-étape 211 de détection du signal de la balise 125 parmi une pluralité de signaux reçus. A cet effet, le récepteur à super réaction inclus dans l'objet connecté 110 permet de détecter le signal de présence émis par la balise 125 grâce à la présence de la sous-porteuse dans le signal de présence, dont l'écart fréquentiel par rapport à la fréquence porteuse du signal de présence est avantageusement prédéterminé. Il convient de souligner que le récepteur à super réaction a avantageusement une très faible consommation énergétique de l'ordre de cent microwatts en réception active. La consommation du récepteur à super réaction peut être réduite en effectuant des détections récurrentes, non contigües, par l'intermédiaire de cycles de détection. L'augmentation de la latence entre deux détections consécutives permet notamment de réduire la consommation de ce récepteur.

Par ailleurs, il convient de souligner que le récepteur à super réaction est avantageusement insensible aux variations en fréquence si la porteuse et les sous porteuses varient de manière semblable, comme c'est le cas lorsque le signal de présence subit l'effet Doppler.

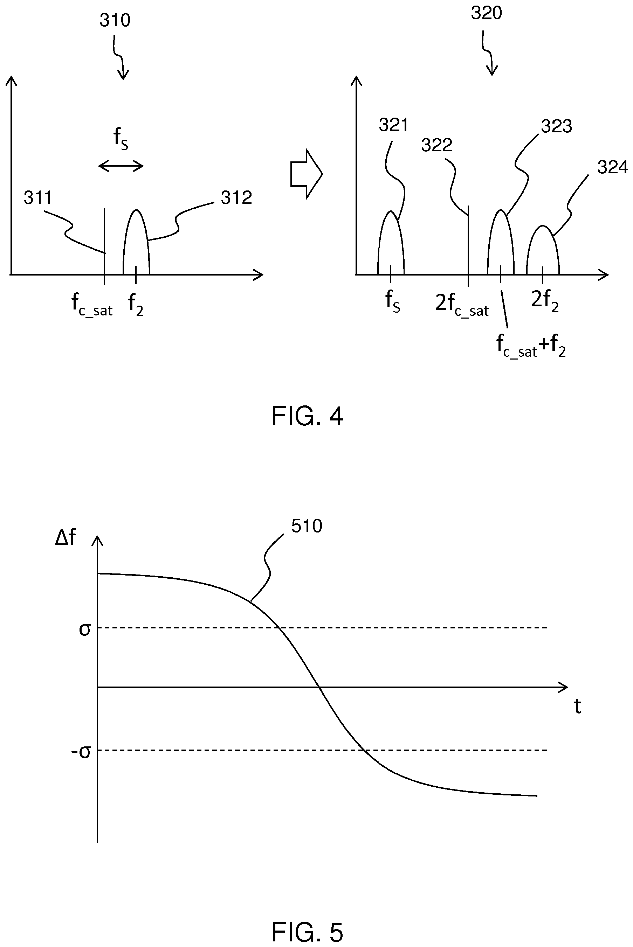

Un exemple de résultat obtenu par ce mécanisme de détection est illustré en figure 4 qui comprend une courbe 310 avant détection et une courbe 320 après détection. La courbe 310 comprend une porteuse 311 de fréquence f_{c}_ₛₐₜ et une sous-porteuse 312 modulée de fréquence f₂. L'écart fréquentiel entre la porteuse et la sous-porteuse est égal à fₛ. La détection permet d'extraire un signal 321 de fréquence fₛ, un signal 322 de fréquence 2f_{c}_ₛₐₜ, un signal 323 de fréquence f_{c}_ₛₐₜ+f₂ et un signal 324 de fréquence 2f₂.

Une analyse du décalage fréquentiel induit par effet Doppler sur le signal de présence reçu par l'objet connecté 110 est effectuée au cours d'une étape 220 du procédé 200.

Lors de cette étape 220 d'analyse, une évaluation de la variation temporelle d'une fréquence principale du signal de présence est par exemple effectuée au cours d'une sous-étape 221. La fréquence principale considérée correspond par exemple à la fréquence de la porteuse du signal de présence.

Afin d'évaluer la variation temporelle de la fréquence principale, le signal de présence est par exemple dupliqué en deux répliques dont l'une est retardée d'un temps déterminé, par exemple de l'ordre de quelques secondes. L'analyse simultanée de ces deux répliques, par exemple par corrélation desdites deux répliques entre elles, permet d'évaluer la variation temporelle de la fréquence principale du signal de présence.

Dans une variante de ce mode de mise en œuvre particulier de l'invention, la variation temporelle de la fréquence principale peut être calculée à partir de la mesure de la fréquence principale à au moins deux instants respectifs distincts.

Il convient de souligner que l'analyse de la variation temporelle de la fréquence principale, qui correspond dans le présent exemple à la fréquence porteuse du signal de présence, est par exemple effectuée en faisant appel à un mécanisme de détection synchrone semblable à celui d'une boucle à verrouillage de phase également connue sous le terme anglais de « *lock-in amplifier ».* La boucle à verrouillage de phase permet notamment d'effectuer des mesures de fréquence ou de déphasage entre deux signaux. Au cours de cette analyse, le récepteur à super réaction peut avantageusement utiliser son oscillateur local de référence absolue. La variation temporelle du décalage fréquentiel induit par effet Doppler est ensuite estimée au cours d'une sous-étape 222. Etant donné que le signal de présence est émis avec une fréquence principale constante au cours du temps, la variation temporelle du décalage fréquentiel induit par effet Doppler est égale à la variation temporelle de la fréquence principale.

Dans des modes particuliers de mise en œuvre de l'étape 220 d'analyse, pouvant être considérés alternativement à ou en complément des modes de mise en œuvre décrits précédemment, le décalage fréquentiel induit par effet Doppler peut être estimé à partir de la mesure de la fréquence principale du signal de présence. Par exemple, la fréquence principale mesurée du signal de présence est comparée à une fréquence principale théorique du signal de présence, qui correspond à la fréquence de la porteuse au moment de l'émission du signal de présence par la balise 125. La fréquence d'émission de la porteuse est dans certains cas connue à l'avance, auquel cas la balise 125 émet sur une fréquence prédéterminée correspondant par exemple à un standard préalablement établi. Lorsque la fréquence d'émission de la porteuse n'est pas connue, la valeur de ladite fréquence d'émission peut être par exemple codée dans le signal de présence, et module par exemple la sous-porteuse modulée dudit signal de présence.

Le procédé 200 comprend ensuite une troisième étape 230 d'évaluation d'un critère de proximité en fonction du résultat de l'analyse du décalage fréquentiel effectuée au cours de l'étape 220 d'analyse.

De manière générale, l'évaluation du critère de proximité vise à déterminer la période propice au déclenchement de l'émission du signal par l'objet connecté 110, et le choix d'un critère de proximité particulier ne constitue qu'une variante d'implémentation de l'invention.

Le critère de proximité évalué dépend de l'analyse effectuée du décalage fréquentiel induit par effet Doppler sur le signal de présence. Ainsi, si l'analyse effectuée a conduit à estimer la variation temporelle du décalage fréquentiel, alors l'évaluation du critère de proximité utilise la variation temporelle estimée dudit décalage fréquentiel ; si l'analyse effectuée a conduit à estimer le décalage fréquentiel, alors l'évaluation du critère de proximité utilise le décalage fréquentiel estimé, etc.

Dans la suite de la description, on se place de manière non limitative dans le cas où, l'étape 220 d'analyse comportant à la fois l'estimation du décalage fréquentiel et l'estimation de la variation temporelle dudit décalage fréquentiel, l'évaluation du critère de proximité utilise à la fois le décalage fréquentiel estimé et la variation temporelle estimée dudit décalage fréquentiel. Le critère de proximité est par exemple considéré comme vérifié si une condition au moins est remplie parmi une première condition portant sur la valeur du décalage fréquentiel induit par effet Doppler sur la fréquence principale du signal de présence et une deuxième condition portant sur la variation temporelle de ce décalage fréquentiel. Alternativement, le critère de proximité peut être considéré comme vérifié si à la fois la première condition et la deuxième condition sont remplies.

Une comparaison du décalage fréquentiel estimé au cours de l'étape 220, avec une valeur seuil prédéterminée, appelée seuil de proximité, est effectuée au cours d'une sous-étape 231.

Un exemple de courbe 510 d'évolution du décalage fréquentiel Δf estimé est représenté en figure 5. Ainsi, si le décalage fréquentiel estimé est inférieur en valeur absolue au seuil de proximité (σ sur la figure 5), le satellite 120 est considéré comme étant à portée de l'objet connecté 110 et la première condition est vérifiée.

Il convient de souligner que si l'angle d'élévation maximum du satellite 120 est faible, c'est-à-dire lorsque le satellite 120 est vu par l'objet connecté 110 comme étant à l'horizon, la courbe de décalage fréquentiel peut être la majorité du temps en-dessous de la valeur seuil. Dans ce cas, il est possible que le satellite 120 reçoive le signal de l'objet connecté 110 avec une faible puissance.

Par conséquent, afin d'améliorer la transmission des signaux des objets connectés 110 vers le satellite 120, la deuxième condition du critère de proximité peut être avantageusement utilisée seule ou en combinaison avec la première condition évaluée au cours de la sous-étape 231. La deuxième condition est par exemple considérée comme remplie lorsque la variation temporelle estimée de la fréquence porteuse mesurée du signal de présence est supérieure à une deuxième valeur seuil prédéterminée. En d'autres termes, la deuxième condition est remplie lorsque la variation temporelle estimée du décalage fréquentiel induit par effet Doppler est supérieure à la deuxième valeur seuil. La deuxième condition du critère de proximité porte ainsi sur la pente de la courbe de la fréquence porteuse du signal de présence, ou sur la courbe du décalage fréquentiel qui est similaire.

A cet effet, une comparaison de la variation temporelle du décalage fréquentiel avec la deuxième valeur seuil est effectuée au cours d'une sous-étape 232. Lorsque la pente de la courbe est en valeur absolue supérieure à une valeur seuil, la deuxième condition est considérée comme remplie. Une telle condition du critère de proximité est avantageuse en ce qu'elle permet en outre de limiter l'émission d'un signal par l'objet connecté à une plage de valeurs particulières de l'angle d'élévation maximum, autour de 90°.

Tel qu'indiqué précédemment, le critère de proximité est par exemple considéré comme vérifié si la première condition et/ou la seconde condition est remplie. Lorsque le critère de proximité est vérifié, l'objet connecté 110 peut émettre un signal à destination du satellite 120 au cours de l'étape 240 d'émission du signal par l'objet connecté 110. Dans le cas contraire, c'est-à-dire lorsque le critère de proximité n'est pas vérifié, l'objet connecté 110 n'émet pas de signal à destination du satellite 120.

De manière plus générale, et tel qu'indiqué précédemment, le choix d'un critère de proximité particulier, et donc d'une ou de plusieurs conditions qui doivent être remplies pour considérer que le critère de proximité est vérifié, ne constitue qu'une variante d'implémentation de l'invention. Par exemple, il est possible de considérer l'une ou plusieurs des conditions à remplir suivantes pour considérer le critère de proximité comme vérifié :
- le décalage fréquentiel estimé ou la valeur absolue du décalage fréquentiel estimé est inférieur à un seuil ;
- le décalage fréquentiel estimé est inférieur en valeur absolue à un seuil et supérieur en valeur absolue à un deuxième seuil ;
- le décalage fréquentiel estimé est inférieur à un seuil et supérieur à un deuxième seuil ;
- le décalage fréquentiel estimé ou la valeur absolue du décalage fréquentiel estimé est supérieur à un seuil
- la variation temporelle estimée du décalage fréquentiel ou la valeur absolue de la variation temporelle estimée du décalage fréquentiel est supérieure à un seuil ;
- la variation temporelle estimée du décalage fréquentiel est supérieure en valeur absolue à un seuil et inférieure en valeur absolue à un deuxième seuil ;
- la variation temporelle estimée du décalage fréquentiel est supérieure à un seuil et inférieure à un deuxième seuil ;
- la variation temporelle estimée du décalage fréquentiel ou la valeur absolue de la variation temporelle estimée du décalage fréquentiel est inférieure à un seuil, etc.

De manière avantageuse, le procédé 200 peut également comprendre une étape 250 de réglage dynamique du critère de proximité par l'objet connecté 110, en fonction d'une information de réglage reçue dans un signal émis par le satellite 120. L'information de réglage permet de régler la valeur du seuil de proximité de la première et/ou de la deuxième condition permettant d'évaluer le critère de proximité au niveau de l'objet connecté 110.

Il convient de souligner que le critère de proximité peut être réglé dynamiquement en fonction du nombre de signaux reçus par le satellite 120 sur une période prédéterminée, ou en fonction du nombre d'objets connectés 110 ayant le satellite 120 à portée. Par ailleurs, la portée du satellite 120, correspondant à la distance maximale à laquelle des signaux émis par le satellite 120 peuvent être reçus par un objet connecté 110, est généralement distincte de la portée de l'objet connecté, correspondant à la distance maximale à laquelle des signaux émis par l'objet connecté 110 peuvent être reçus par le satellite 120. La portée du satellite 120, également appelée portée descendante, peut être différente de la portée de l'objet, également appelée portée montante.

Dans le présent exemple, la puissance des signaux de présence émis par la balise 125 est plus importante que la puissance des signaux émis par les objets connectés 110. Par conséquent, la portée du satellite est en principe plus importante que la portée de l'objet connecté 110.

En d'autres termes, le réglage du critère de proximité permet d'ajuster la taille de la couverture du satellite 120, également appelée la fauchée du satellite 120, en déterminant le nombre d'objets connectés 110 à portée du satellite 120, aptes à transmettre un signal au satellite 120.

## Revendications

1. - Procédé (200) de transmission d'un signal par un dispositif émetteur (110) vers un satellite (120) se déplaçant en orbite autour de la Terre, ledit dispositif émetteur (110) et le satellite (120) comprenant des moyens de télécommunication sans fil,
ledit procédé comprenant des étapes de :
- réception (210) par ledit dispositif émetteur (110) d'un signal émis par le satellite (120), dit signal de présence ;
- analyse (220) d'un décalage fréquentiel induit par effet Doppler sur le signal de présence reçu par ledit dispositif émetteur (110) ;
**caractérisé en ce que** ledit procédé comprend également des étapes de :
- évaluation (230) par ledit dispositif émetteur (110) d'un critère de proximité entre ledit dispositif émetteur (110) et ledit satellite (120) à partir d'une estimation de la variation temporelle du décalage fréquentiel et/ou à partir d'une estimation du décalage fréquentiel, calculée(s) au cours de l'étape d'analyse du décalage fréquentiel ;
- émission d'un signal par ledit dispositif émetteur (110) si le critère de proximité est vérifié.

2. - Procédé (200) selon la revendication 1, **caractérisé en ce que** l'étape d'analyse (220) du décalage fréquentiel comprend une sous-étape de mesure d'une fréquence principale du signal de présence et une sous-étape d'estimation du décalage fréquentiel induit par effet Doppler en fonction de la fréquence principale mesurée et d'une fréquence principale théorique dudit signal de présence.

3. - Procédé (200) selon la revendication 2, **caractérisé en ce que** l'étape d'évaluation du critère de proximité comprend une sous-étape (231) de comparaison du décalage fréquentiel estimé avec une valeur seuil.

4. - Procédé (200) selon l'une des revendications 1 à 3, **caractérisé en ce que** l'étape d'analyse (220) du décalage fréquentiel comprend une sous-étape (222) d'estimation d'une variation temporelle du décalage fréquentiel induit par effet Doppler à partir d'une évaluation d'une variation temporelle de la fréquence principale du signal de présence entre au moins deux instants respectifs différents.

5. - Procédé (200) selon la revendication 4, **caractérisé en ce que** l'étape d'évaluation du critère de proximité comprend une sous-étape (232) de comparaison de la variation temporelle estimée du décalage fréquentiel avec une valeur seuil.

6. - Procédé (200) selon l'une quelconque des revendications 1 à 5, **caractérisé en ce que** le signal de présence émis par le satellite comprend au moins une sous-porteuse modulée avec un écart fréquentiel prédéterminé par rapport à une fréquence porteuse.

7. - Procédé (200) selon la revendication 6, **caractérisé en ce que** l'étape de réception (210) du signal de présence comprend une sous-étape (211) de détection du signal de présence en fonction dudit écart fréquentiel.

8. - Procédé (200) selon la revendication 7, **caractérisé en ce que** la sous-étape de détection (211) est effectuée par l'intermédiaire d'un récepteur à super réaction.

9. - Procédé (200) selon l'une quelconque des revendications 1 à 8, **caractérisé en ce que** l'analyse (220) du décalage fréquentiel induit par effet Doppler sur le signal de présence comprend une étape de mesure d'une fréquence principale du signal de présence ou d'une variation temporelle de ladite fréquence principale dudit signal de présence, effectuée par l'intermédiaire d'une boucle à verrouillage de phase.

10. - Procédé (200) selon l'une quelconque des revendications 1 à 9, **caractérisé en ce qu'**il comprend en outre une étape (250) de réglage dynamique du critère de proximité par le dispositif émetteur, en fonction d'une information de réglage reçue dans un signal émis par le satellite.

11. - Procédé (200) selon la revendication 10, **caractérisé en ce que** l'information de réglage est déterminée, par le satellite, en fonction du nombre de signaux reçus par ledit satellite sur une période prédéterminée.

12. - Dispositif émetteur (110) d'un système (100) de télécommunication sans fil, **caractérisé en ce qu'**il met en œuvre le procédé de transmission selon l'une quelconque des revendications 1 à 10.

13. - Système (100) de télécommunication sans fil **caractérisé en ce qu'**il comprend au moins un dispositif émetteur (110) selon la revendication 12, et au moins un satellite (120) se déplaçant en orbite autour de la Terre.

## Patentansprüche

1. Verfahren (200) zur Übertragung eines Signals durch eine Sendevorrichtung (110) zu einem Satelliten (120), der sich im Orbit um die Erde bewegt, wobei die Sendevorrichtung (110) und der Satellit (120) Mittel zur drahtlosen Telekommunikation umfassen,
wobei das Verfahren Schritte umfasst des:
- Empfangens (210) eines vom Satelliten (120) gesendeten Signals, das als Präsenzsignal bezeichnet wird, durch die Sendevorrichtung (110);
- Analysierens (220) einer durch Doppler-Effekt an dem von der Sendevorrichtung (110) empfangenen Präsenzsignal induzierten Frequenzverschiebung;
**dadurch gekennzeichnet, dass** das Verfahren ebenfalls Schritte umfasst des:
- Bewertens (230) eines Entfernungskriteriums zwischen der Sendevorrichtung (110) und dem Satelliten (120) auf Grundlage einer Schätzung der zeitlichen Variation der Frequenzverschiebung und/oder auf Grundlage einer Schätzung der Frequenzverschiebung, die beim Schritt des Analysierens der Frequenzverschiebung berechnet wurde(n), durch die Sendevorrichtung (110);
- Sendens eines Signals durch die Sendevorrichtung (110), wenn das Entfernungskriterium verifiziert wird.

2. Verfahren (200) nach Anspruch 1, **dadurch gekennzeichnet, dass** der Schritt des Analysierens (220) der Frequenzverschiebung einen Teilschritt des Messens einer Hauptfrequenz des Präsenzsignals und einen Teilschritt des Schätzens der durch Doppler-Effekt induzierten Frequenzverschiebung in Abhängigkeit von der gemessenen Hauptfrequenz und einer theoretischen Hauptfrequenz des Präsenzsignals umfasst.

3. Verfahren (200) nach Anspruch 2, **dadurch gekennzeichnet, dass** der Schritt des Bewertens des Entfernungskriteriums einen Teilschritt (231) des Vergleichens der geschätzten Frequenzverschiebung mit einem Schwellenwert umfasst.

4. Verfahren (200) nach einem der Ansprüche 1 bis 3, **dadurch gekennzeichnet, dass** der Schritt des Analysierens (220) der Frequenzverschiebung einen Teilschritt (222) des Schätzens einer zeitlichen Variation der durch Doppler-Effekt induzierten Frequenzverschiebung auf Grundlage einer Bewertung einer zeitlichen Variation der Hauptfrequenz des Präsenzsignals zwischen mindestens zwei verschiedenen jeweiligen Zeitpunkten umfasst.

5. Verfahren (200) nach Anspruch 4, **dadurch gekennzeichnet, dass** der Schritt des Bewertens des Entfernungskriteriums einen Teilschritt (232) des Vergleichens der geschätzten zeitlichen Variation der Frequenzverschiebung mit einem Schwellenwert umfasst.

6. Verfahren (200) nach einem der Ansprüche 1 bis 5, **dadurch gekennzeichnet, dass** das vom Satelliten gesendete Präsenzsignal mindestens einen Unterträger umfasst, der in Bezug auf eine Trägerfrequenz mit einem vorbestimmten Frequenzversatz moduliert ist.

7. Verfahren (200) nach Anspruch 6, **dadurch gekennzeichnet, dass** der Schritt des Empfangens (210) des Präsenzsignals einen Teilschritt (211) des Erkennens des Präsenzsignals in Abhängigkeit vom Frequenzversatz umfasst.

8. Verfahren (200) nach Anspruch 7, **dadurch gekennzeichnet, dass** der Teilschritt des Erkennens (211) mithilfe eines Superregenerativempfängers erfolgt.

9. Verfahren (200) nach einem der Ansprüche 1 bis 8, **dadurch gekennzeichnet, dass** das Analysieren (220) der durch Doppler-Effekt am Präsenzsignal induzierten Frequenzverschiebung einen Schritt des Messens einer Hauptfrequenz des Präsenzsignals oder einer zeitlichen Variation der Hauptfrequenz des Präsenzsignals umfasst, der mithilfe einer Phasenregelschleife erfolgt.

10. Verfahren (200) nach einem der Ansprüche 1 bis 9, **dadurch gekennzeichnet, dass** es weiter einen Schritt (250) des dynamischen Einstellens des Entfernungskriteriums durch die Sendevorrichtung in Abhängigkeit von einer Einstellinformation umfasst, die in einem vom Satelliten gesendeten Signal empfangen wird.

11. Verfahren (200) nach Anspruch 10, **dadurch gekennzeichnet, dass** die Einstellinformation vom Satelliten in Abhängigkeit von der Anzahl von Signalen bestimmt wird, die vom Satelliten in einem vorbestimmten Zeitraum empfangen werden.

12. Sendevorrichtung (110) für ein drahtloses Telekommunikationssystem (100), **dadurch gekennzeichnet, dass** sie das Übertragungsverfahren nach einem der Ansprüche 1 bis 10 einsetzt.

13. Drahtloses Telekommunikationssystem (100), **dadurch gekennzeichnet, dass** es mindestens eine Sendevorrichtung (110) nach Anspruch 12 und mindestens einen Satelliten (120) umfasst, der sich im Orbit um die Erde bewegt.

## Claims

1. - A method (200) for transmitting a signal with an emitting device (110) to a satellite (120) moving in orbit about the Earth, said emitting device (110) and the satellite (120) comprising wireless telecommunication means, said method comprising steps of:
- receiving (210) with said emitting device (110) a signal emitted by the satellite (120), called the presence signal;
- analysing (220) a frequency shift induced by Doppler effect in the presence signal received by said emitting device (110);
**characterised in that** said method comprises also steps of:
- evaluating (230) by said emitting device (110) a proximity criterion quantifying the proximity between said emitting device (110) and said satellite (120), on the basis of an estimation of a variation as a function of time in the frequency shift and/or on the basis of an estimation of the frequency shift, computed during the analysis of the frequency shift;
- emitting a signal with said emitting device (110) if the proximity criterion is met.

2. - The method (200) as claimed in claim 1, **characterized in that** the step of analysing (220) the frequency shift comprises a substep of measuring a main frequency of the presence signal and a substep of estimating the frequency shift induced by Doppler effect depending on the measured main frequency and on a theoretical main frequency of said presence signal.

3. - The method (200) as claimed in claim 2, **characterized in that** the step of evaluating the proximity criterion comprises a sub-step (231) of comparing the estimated frequency shift with a threshold value.

4. - The method (200) as claimed in one of claims 1 to 3, **characterized in that** the step of analysing (220) the frequency shift comprises a substep (222) of estimating a variation as a function of time in the frequency shift induced by Doppler effect on the basis of an evaluation of a variation as a function of time in the main frequency of the presence signal between at least two different respective times.

5. - The method (200) as claimed in claim 4, **characterized in that** the step of evaluating the proximity criterion comprises a substep (232) of comparing the estimated variation as a function of time in the frequency shift with a threshold value.

6. - The method (200) as claimed in any one of claims 1 to 5, **characterized in that** the presence signal emitted by the satellite comprises at least one modulated sub-carrier with a preset frequency difference with respect to a carrier frequency.

7. - The method (200) as claimed in claim 6, **characterized in that** the step of receiving (210) the presence signal comprises a substep (211) of detecting the presence signal depending on said frequency difference.

8. - The method (200) as claimed in claim 7, **characterized in that** the detecting substep (211) is carried out by way of a super-regenerative receiver.

9. - The method (200) as claimed in any one of claims 1 to 8, **characterized in that** the analysis (220) of the frequency shift induced by Doppler effect in the presence signal comprises a step of measuring a main frequency of the presence signal or a variation as a function of time in said main frequency of said presence signal, carried out by way of a phase-locked loop.

10. - The method (200) as claimed in any one of claims 1 to 9, **characterized in that** it furthermore comprises a step (250) in which the proximity criterion is dynamically adjusted by the emitting device, depending on adjustment information received in a signal emitted by the satellite.

11. - The method (200) as claimed in claim 10, **characterized in that** the adjustment information is determined, by the satellite, depending on the number of signals received by said satellite in a preset period.

12. - An emitting device (110) of a wireless telecommunication system (100), **characterized in that** it implements the transmitting method as claimed in any one of claims 1 to 10.

13. - A wireless telecommunication system (100) **characterized in that** it comprises at least one emitting device (110) as claimed in claim 12, and at least one satellite (120) moving in orbit about the Earth.
